# EUROPEAN PATENT SPECIFICATION

(11) **EP 0 670 980 B1**
(45) Date of publication and mention of the grant of the patent: **28.08.1996**
(21) Application number: 94900920.3
(22) Date of filing: 24.11.1993
(51) Int. Cl.: F16L 33/01, F16L 11/08

(54) **HOSE END FITTING AND HOSE ASSEMBLY**
SCHLAUCHENDANSCHLUSS UND SCHLAUCHAUFBAU
EMBOUT TERMINAL POUR TUYAU ET ENSEMBLE TUYAU

(30) Priority: 24.11.1992 GB 9224549
(43) Date of publication of application: 13.09.1995
(73) Proprietor: DUNLOP LIMITED, London SW1P 2PL (GB)
(72) Inventor: ZANDIYEH, Ali Reza Kambiez, Scartho, Grimsby DN33 3EG (GB); RICHARDS, Stephen John, Grimsby, South Humberside DN37 0UR (GB)
(74) Representative: Badger, John Raymond
(86) International application number: GB9302415
(87) International publication number: WO9412822

(56) References cited:
- EP-A- 0 202 818
- DE-B- 1 180 584
- GB-A- 2 258 507
- US-A- 2 854 030
- US-A- 3 119 415

## Description

This invention provides a hose end fitting and a hose assembly comprising said end fitting in combination with a flexible reinforced hose. The invention relates in particular, although not exclusively, to a hose end fitting and a hose assembly of a large bore type having a bore of at least 4 inches (100 mm), the assembly being constructed typically by building the hose in situ around the end fitting.

Large bore hoses are employed commonly for transporting high volumes of oil such as, for example, when loading and unloading an oil tanker, especially offshore. The hoses may incorporate buoyancy so that they are able inherently to float.

In use the hose assemblies are exposed to arduous conditions and are subject to high loads especially at their end regions, resulting in a potential risk of failure. Sometimes it is possible to reduce the risk of failure by providing additional material but that leads to added costs. Also in the case of offshore floating type hoses the weight of any additional material will necessitate additional buoyancy.

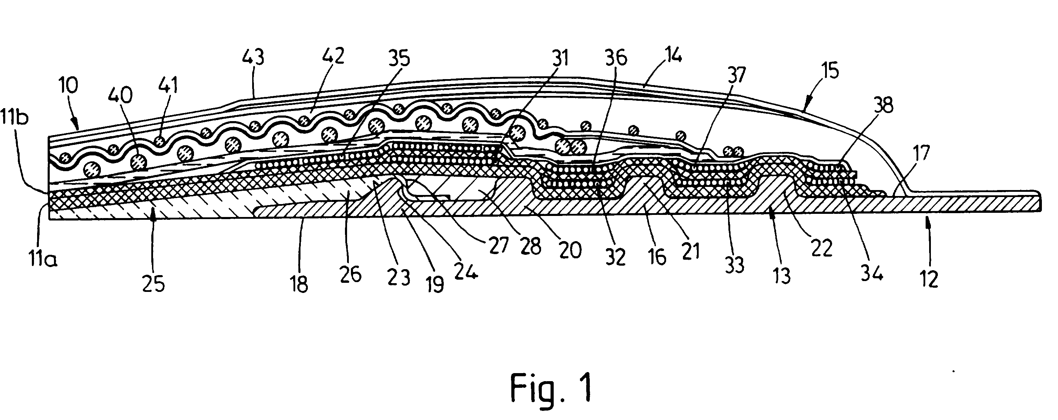

A conventional hose and end fitting assembly is shown in part, in longitudinal cross-section, in Figure 1. The hose 10 is of a large bore (24 inch bore) and has a single, multi-layer type reinforcing carcass 11.

The end fitting 12 has an end location flange (not shown) integral with one end of a beaded insert 13 around which the end region 14 of hose 15 is built.

The insert 13 comprises a tubular body 16 of circular cross-section and an outer surface 17 tapered at a first, inner tail end 18 but otherwise cylindrical apart from the presence of four uniformly spaced retention beads 19-22.

The innermost bead 19 is of a saw-tooth shape in cross-section. It has a first, inclined surface 23 adjacent the tapered end 18 and a second, abutment face 24 which lies substantially perpendicular to the longitudinal axis of the fitting. The other three beads 20-22 are of a generally rectangular shape in cross-section.

The hose 10 has an inner lining 25 which is provided at the end of the hose with a thickened skirt 26 and the lining terminates adjacent the sawtooth bead 19 apart fran a thin tail layer 27. The lining layer 25 has a maximum outer diameter over the bead 19 and decreases in diameter progressively to a minimum (which is the normal outer diameter of the lining over the major part of the length of the hose) at a position at least 2.0 metres inward fran the end 14 of the hose. The tail layer 27 extends over the peak of the bead 19, downwards adjacent the abutment face 24 and axially over the surface 17 to terminate between the bead 19 and adjacent bead 20.

A filler ring 28 of polymeric material having a fabric reinforcement embedded therein is provided over the tail layer 27 to fill the space between the beads 19 and 20.

The main reinforcement carcass 11 extends over the lining 25 and filler ring 28 to lie in contact with and conform to the shape of the beads 20-22. The carcass 11 is held against the end fitting by a plurality of binding wire assemblies (31-32) which each comprise one or more layers of helically extending binding wires. A first, major group 11a of layers of the multi-layer reinforcing carcass 11 is secured against the end fitting by an inner binding wire assembly 31 which extends from above the peak of bead 19 to above the peak of bead 20. This assembly holds the layers 11a against the filler ring 28. Three other inner binding wire assemblies 32,33,34 hold the layers 11a in a distorted configuration in the grooves between the beads 20,21 & 22 and to the right of bead 22. These assemblies and the assembly 31 are formed from a single high tensile steel wire wound at touch pitch to form the assemblies and at a greater pitch to extend between the assemblies.

The remaining carcass layers 11b are applied over the wire assemblies 31-34 and are held against the end fitting by outer wire assemblies 35-38. Assembly 35 extends axially around the tapered end 18 of the end fitting, the first and second beads 19,20 and the space between those beads. The assemblies 36-38 lie around the inner binding wire assemblies 32-34 respectively, and the assemblies 35-58 are formed from a single length of high tensile steel wire in the same manner as the assemblies 31-34.

From the foregoing it will be understood that the reinforcing carcass is held firmly against the end fitting over the whole of that part of its length for which it is relatively undistorted, i.e. from the end 18, over the bead 19, filler ring 28 and second bead 20. In contrast all of the layers are secured at axially localised regions where the layers lie distorted to follow the contours provided by the beads 20-22.

The bound reinforcing carcass is surrounded by at the least one helical crush resisting wire 40, another helical wire 41, a fabric interlayer 30 between the wires 40,41 and layers 42,43 of inner and outer component layers of the base cover.

Other examples of hoses for use in loading and unloading an oil tanker are described in US-A-2854030 and US-A-3119415. These describe hoses having a main reinforcement provided by a plurality of layers of reinforcement and with a rubber layer separating some of those layers from the others, and therefore correspond to the preamble of claim 1.

The aforedescribed hose constructions can provide good reliability but particularly if subject to conditions beyond the design specification there is a risk of premature bursting or of cracking of the lining layer in the vicinity of the end fitting.

The present invention seeks to provide an improved hose assembly and an improved end fitting for a hose whereby improved strength and fatigue resistance may be achieved without an undue increase of weight.

In accordance with one of its aspects the present invention provides a hose assembly comprising in combination a reinforced hose an end of which surrounds at least part of an end fitting, said end fitting comprising a tail portion which lies inwards of the hose, the outer surface of the end fitting being provided with at least a first retention bead spaced axially from the tail end of the fitting, said hose comprising a main carcass comprising a plurality of layers of reinforcement which extend axially over said retention bead and relative to which the main carcass is axially secured, a lining layer positioned radially inwards of the main carcass to provide a smooth bore contiguous with the bore of the end fitting, said inner lining extending over at least the tail portion of the end fitting to lie between that fitting and the main carcass, and a rubber interlayer arranged to separate one or more of the layers of reinforcement from the other layers of reinforcement of the main carcass and to extend along the full length of the hose to act as a secondary lining layer, wherein the interlayer connects with the innermost lining about the axial ends of the inner layer(s) of the main carcass reinforcement to provide leak protection in the event of failure of the innermost lining.

A second retention bead may be provided for location of an outer group of reinforcement layers. Lining layer material, of the inner and/or secondary lining, may be employed to ensure that the space between the two beads is fully occupied thereby to support the outer group of layers so that they can extend free from distortion between the regions of the peaks of the two beads.

Preferably less than one half, more preferably less than a third of the total number of reinforcement layers lie between the inner and secondary lining layers.

The lining may be of substantially uniform thickness over the length of the hose to a position within at least 1 metre of the tail end of the end fitting and then increasing progressively in outer diameter to a maximum at a position where it surrounds the end fitting.

Preferably the inner lining is of uniform thickness to within 500 mm, more preferably within 325 mm of the tail end of the fitting.

The outer diameter of the lining may increase progressively to a maximum where it extends over the peak of the retention bead. Preferably it increases at a uniform rate from its minimum outer diameter at least to a position around the tail portion of the end fitting.

Part of the tail portion of the end fitting, being a part nearest the tail end, preferably has a tapered external surface, the taper preferably lying in the angle range 2 to 5 degrees.

The lining layer may reduce in thickness where it extends over the peak regions of the first retention bead. It may have, in the longitudinal direction of the hose assembly, its axial position of maximum diameter aligned with the peak region of that bead.

Preferably the lining layer, of a reduced thickness corresponding substantially to that at the peak region, extends also over a rearwards section of the end fitting beyond the bead.

If the hose assembly incorporates an end fitting having two or more beads, those additional beads should be spaced further, rearwards fran the tail end of the end fitting than said first bead.

Said first retention bead preferably has a rear portion which faces away from the tail end and which as considered in longitudinal cross-section is of a low aspect ratio profile whereby the axial length of that rear portion fran the position of maximum radius of the bead to the position of minimum radius is at least 1.5 times the difference between said radii.

Preferably said ratio of axial length to radial thickness of a first bead of a low profile type is at least 2:1 and more preferably lies in the range 2:1 to 3:1.

The rear portion of a low profile bead may be curved in cross-section and may be of a part circular shape thereby to provide a rearward facing surface of part spherical shape. Other curved profiles, or a rectilinear profile to define a frusto-conical surface, may be employed, the profile being selected to provide a substantially gradual reduction of diameter over the rear part of the bead particularly as compared with conventional beads which feature an abrupt reduction of diameter at the rear part of a bead.

The other, forward facing surface of a low profile type first retention bead which faces towards the tail end of the fitting preferably also has a profile for which the ratio of axial length to radial thickness is at least 1.5:1. The forward facing surface may have a profile which is a reverse of that of the rearward facing surface so that the overall bead profile as considered in longitudinal cross-section is symmetrical about a plane containing the outermost circumference of the bead.

Preferably a low profile type first retention bead is spaced fran the tail end of the end fitting by a tail portion having an axial length at least equal to the axial length of the rear part of the bead, and preferably at least 1.5 times that length.

The end fitting may be provided with a second bead which may be utilized as a retention bead to assist the aforedescribed first bead to locate part of a hose reinforcement carcass or which may be utilized as a building aid for termination of outer layers of the hose structure. The second bead may be spaced axially from a first bead of a low profile type by a distance at least equal to the axial length of the rear part of said low profile bead.

The second bead may have a greater radial thickness (i.e. greater maximum outer radius) than the first bead. It may have a rearward facing surface (i.e. which faces away from the first bead) which lies at least in part inclined to the longitudinal axis of the fitting. The other surface of the bead, facing towards the first bead, may be relatively steep and may lie substantially in a plane perpendicular to said longitudinal axis.

Two assemblies of binding wires may be provided axially spaced and arranged to act at opposite sides of the first retention bead.

Preferably the binding wire assembly neighbouring a rearward facing surface of the first bead acts primarily to compress one or more of the reinforcement layers radially against a cylindrical outer surface of the end fitting and secondarily against a part of that rearward facing surface which is adjacent that cylindrical surface. That binding wire assembly may be of a kind comprising a plurality of layers of bidding wire.

The binding wire assembly neighbouring the other, forward facing surface of the first bead preferably is of a single layer thickness, and may comprise three or more axially spaced groups of wire in which in each group successive turns of wire lie at touch pitch. A minority of the groups may be positioned to act against a forward facing surface of the bead where that surface lies inclined to the longitudinal axis of the fitting.

One wire may extend fran one group to another, but preferably the wire material of one assembly does not extend into association with the other assembly. The presence of a binding wire which extends over the peak of the first bead is thereby avoided.

In addition to the reinforcement layers being split into two groups by binding wire assemblies, which are hereafter referred to as first binding wire assemblies, the second, outer group of reinforcement layers may terminate further fran the tail end of the fitting than the first, inner layer(s). The outer group preferably is arranged to extend over a second retention bead and to be secured to the fitting at either side of that bead by two second binding wire assemblies corresponding respectively with the two first binding wire assemblies which secure the inner layer(s) either side of the first bead. The outer group of layers additionally may be secured about the tail portion by a binding wire assembly which preferably comprises three or more axially spaced groups. The resulting three binding wire assemblies provided around the outer group of layers preferably are separate from one another so as to avoid the presence of a binding wire over the peak of either of the retention beads.

The first inner layer, or group of layers preferably terminates between the first bead and the second bead.

Embodiments of the present invention will now be described by way of example and with reference to the accompanying diagrammatic drawings wherein:-
Figure 2 is a longitudinal sectional view of part of a hose and end fitting assembly in accordance with the present invention;
Figure 3 is a view similar to that of Figure 2 of a hose assembly having a modified end fitting;
Figure 4 is a side view, part in longitudinal section, of the end fitting of Figure 3, and
Figure 5 is a view similar to that of Figure 2 of another hose assembly of modified construction.

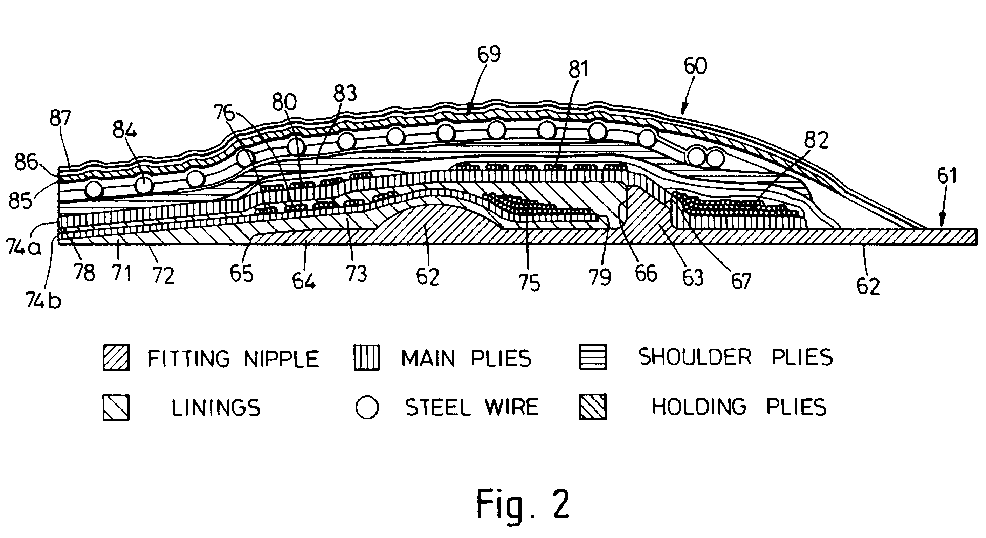

In the construction of Figure 2 a hose assembly 60 comprises a tubular end fitting 61 having a smooth cylindrical 24" diameter bore and two external beads 62,63.

The outer surface of the fitting 61 at each side of the beads is cylindrical except for a part of the axial length of the inner end portion 64 which is slightly tapered at an angle range of between 2 and 5 degrees to the longitudinal axis over the first half of the distance from the inner end 65 to a first 62 of the retention beads.

The first bead 62 is of a part-circular symmetrical profile as viewed in section in Figure 2 and is of a low profile. The extent of the profile in the longitudinal direction of the fitting in this example is 2.5 times the extent to which the profile extends outwards of the neighbouring cylindrical surfaces of the fitting. The tail portion 64 has an axial length which equals that of the first bead, i.e. twice the axial extent of the rearward facing part of the bead.

The second retention bead 63 is substantially of a saw-toooth profile, but of a reverse orientation compared with that of a conventional hose end fitting. The bead 63 has an abutment face 66 which lies in a plane perpendicular to the longitudinal axis, facing the bead 62, and a frusto-conical face 67 which faces outwards and away fran the first bead 62, at an angle of 45 degrees.

The bead 63 extends radially outwards fran the cylindrical outer surfaces of the fitting by approximately 60% further than the bead 62.

The hose and end fitting assembly is constructed by building the hose end portion 69 around the end fitting 61.

A hose lining layer 71 has an inner surface 72 which defines a bore corresponding to that of the end fitting and an outer surface which increases progressively from a minimum diameter at a position approximately 280 mm inwards fran the hose fitting inner end 65 to a maximum over the first retention bead. The lining layer 71 terminates substantially adjacent the second bead 63.

The main multi-layer reinforcing carcass 74 of the hose is divided into two groups of layers, an inner group 74a and an outer group 74b. The inner group comprises a minority of the number of reinforcing layers, in this case a third of the total.

The inner group 74a conforms to the contours of the lining layer 71 and also terminates substantially adjacent the second retention bead 63. It is held in position around the end fitting by two independent inner groups 73,75 of binding wires provided one each side of the first bead 62. Each binding wire is a high tensile steel wire.

A first group 73 surrounds the tapered end zone of the fitting and comprises five zones 76 slightly spaced apart axially to allow surrounding hose wall material to bond to the layers 74a. Each zone is formed fran a single thickness of wire, and the five zones may be formed from a single continuous wire.

The second group 75 comprises four superimposed zones each of a single thickness of wire, and the zones may be formed fran a single continuous wire.

The zones of group 75 are superimposed in an asymmetric manner biassed towards the bead 62 so as to hold the reinforcement layers 74a uniformly against the bead and in particular the region where the bead meets the cylindrical surface of the fitting, as well as to hold it against that cylindrical surface.

The inner group 74a is covered by a layer 78 of polymeric material, typically integral with that of the lining layer by extending around the axial end of the group 74a. That layer is thickened in the region between the beads 62,63 so as to occupy fully the available space therebetween, and it acts as an inter-layer to separate the inner group 74a fran the surrounding outer group 74b of carcass reinforcing layers.

The outer group 74b extends further than the inner group 74a and surrounds the frusto-conical face 67 of the second bead and part of the neighbouring outer cylindrical surface of the end fitting.

The outer group 74b is held in position by three groups 80-82 of binding wires. A first group 80 surrounds the tapered end zone, a second group 81 lies axially between the peaks of the first and second beads 62,63 and the third group 82 lies alongside the frusto-conical face of the second bead 63.

The groups 80 and 81 are each constructed in a manner similar to the aforedescribed inner group 73 and the group 82 corresponds substantially with the aforedescribed group 75.

The hose construction is then completed by the application of shoulder plies 83 of elastomeric material to end regions of the hose (to extend over approximately the length of the lining layer which is tapered), a helical crush resisting wire 84 and layers 85,86,87 of inner and outer component layers of the hose cover.

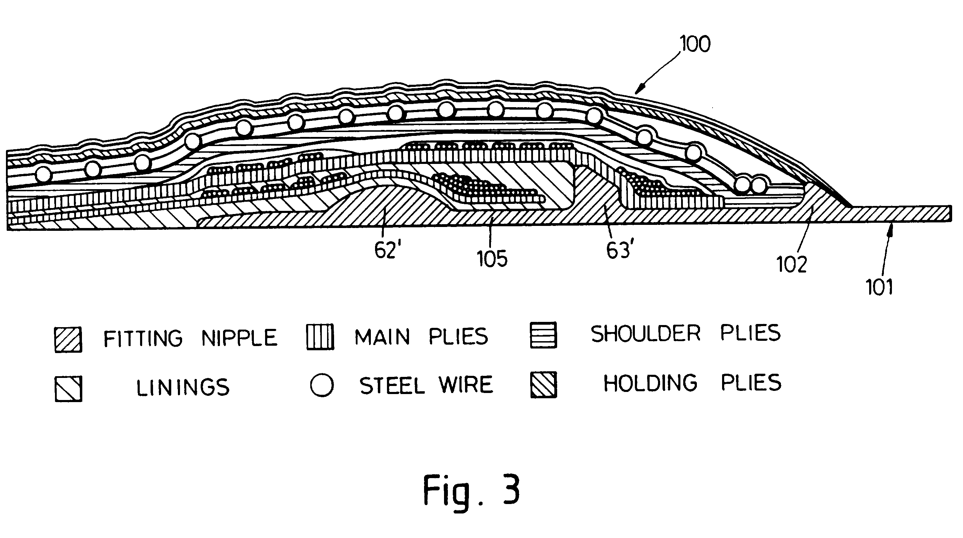

In a second embodiment of the invention, shown in Figure 3, a hose assembly 100 comprises an end fitting 101 of a kind similar to the fitting 61 of Figure 1 apart from the provision of a third bead 102 at an outward end of the fitting. The rib 102 is of a generally similar profile to that of the aforedescribed second bead 63, but is of a reduced radial extent. It serves as a building aid to assist smooth termination of the hose cover layers and does not function to provide axial location of the fitting relative to the main carcass reinforcement layers.

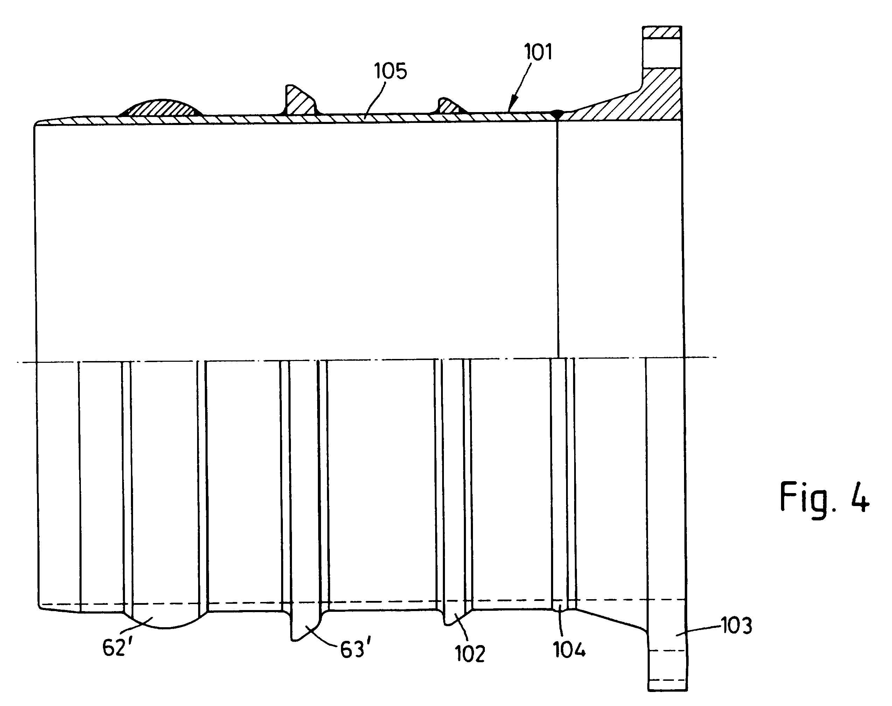

The end fitting 101 of Figure 3 is shown in more detail in Figure 4. This shows that the three beads 62',63' and 102 may be performed as individual rings which are then welded to the cylindrical tubular body portion 105 of the fitting, and that an end flange 103 may be welded at 104 to that body portion.

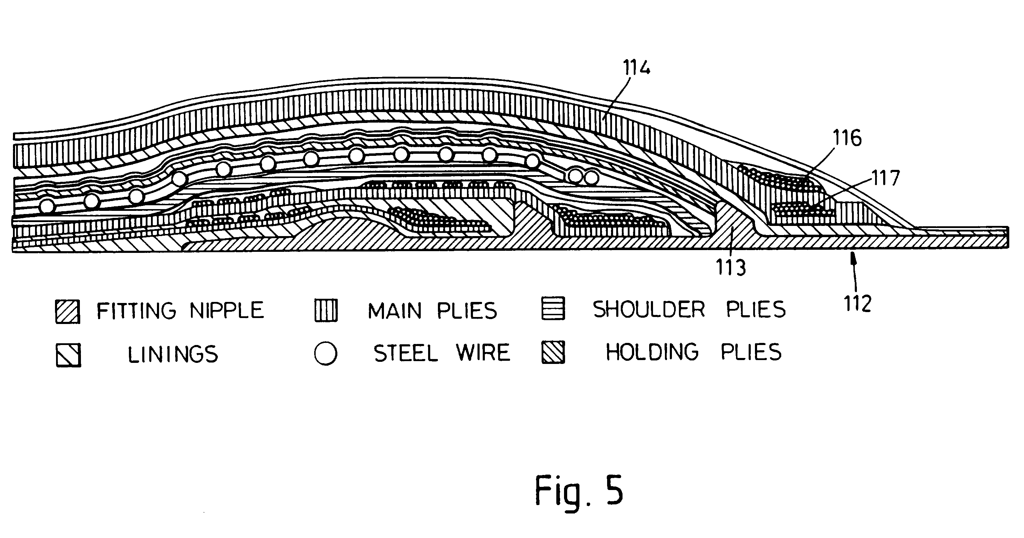

In a further embodiment shown in Figure 5 a hose assembly 110 comprises a twin carcass type hose 111 which incorporates an end fitting 112 which is generally similar to that of Figure 3 except that the bead 102 is replaced by a bead 113 of a cross-section which corresponds substantially with that of the bead 63' of Figure 3.

The bead 113 serves to assist with retention of the secondary carcass layers 114. The secondary carcass is held against a frusto-conical surface 115 of the bead 113 by a surrounding asymmetric arrangement of superimposed layers of cords 116 corresponding substantially with the aforedescribed groups 75,82 and by embedded layers of cords 117 provided sandwiched between two of the secondary carcass layers.

By providing a low profile retention bead it is found that there is a useful improvement in the durability of the hose as compared with a hose of conventional construction.

## Claims

1. A hose assembly comprising in combination a reinforced hose an end of which surrounds at least part of an end fitting (61), said end fitting (61) comprising a tail portion (64) which lies inwards of the hose (69), the outer surface of the end fitting being provided with at least a first retention bead (62) spaced axially from the tail end (65) of the fitting, said hose comprising a main carcass reinforcement (74) comprising a plurality of layers (74a,74b) which extend axially over said retention bead (62) and relative to which the main carcass is axially secured, a lining layer (71) positioned inwards of the main carcass (74) to provide a smooth bore contiguous with the bore of the end fitting, said inner lining extending over at least the tail portion (64) of the end fitting to lie between that fitting and the main carcass, and a rubber interlayer (78) arranged to separate one or more of the layers (74a) of reinforcement from the other layers (74b) of reinforcement of the main carcass (74) and to extend along the full length of the hose to act as a secondary lining layer, characterised in that the interlayer (78) connects with the innermost lining (71) about the axial ends of the inner layer(s) (74a) of reinforcement to provide leak protection in the event of failure of the innermost lining (71).

2. A hose assembly in accordance with claim 1 characterised in that a second retention bead (63) is provided for location of an outer group (74a) of reinforcement layers, lining layer material (78) being employed to ensure that the space between the two beads (62,63) is fully occupied thereby to support the outer group of layers so that they can extend free from distortion between the regions of the peaks of the two beads.

3. A hose assembly in accordance with claim 1 or claim 2, characterised in that less than half of the total number of reinforcement layers of the main carcass lie between the inner (71) and secondary (78) lining layers.

4. A hose assembly in accordance with any one of the preceding claims, characterised in that two assemblies (73,75) of binding wires are provided axially spaced and arranged to act at opposite sides of the first retention bead (62).

5. A hose assembly in accordance with claim 4, characterised in that said two assemblies (73,75) of binding wires act on only those (74b) of the reinforcement layers of the main carcass which lie between the inner and secondary lining layers (71,78).

6. A hose assembly in accordance with any one of the preceding claims, characterised in that the second, outer group (74a) of layers terminate further from the tail end of the fitting than the first, inner layer(s) (74b).

7. A hose assembly in accordance with claim 6, characterised in that the first inner layer, or group of layers terminates between said first bead (62) and a second bead (63).

8. A hose assembly in accordance with any one of the preceding claims, characterised in that the inner lining layer (71) is of substantially uniform thickness over the length of the hose to a position within at least 1 metre, preferably 500 mm, of the tail end of the end fitting and increases progressively in outer diameter to a maximum at a position where it surrounds the end fitting.

9. A hose assembly in accordance with any one of the preceding claims, characterised in that the outer diameter of the inner lining (71) increases at a uniform rate from its minimum outer diameter at least to a position around the tail portion of the end fitting.

10. A hose assembly in accordance with any one of the preceding claims, characterised in that the inner lining layer (71) reduces in thickness where it extends over the peak region of the innermost bead (62) in a direction from the tail end of the end fitting.

11. A hose assembly in accordance with any one of the preceding claims, characterised in that the inner lining layer (71) has, in the longitudinal direction of the hose assembly, its axial position of maximum diameter substantially aligned with the peak region of the innermost bead (62).

## Patentansprüche

1. Schlauchaufbau, in Kombination umfassend einen verstärkten Schlauch, von dem ein Ende wenigstens einen Teil eines Endanschlusses (61) umgibt, wobei der Endanschluß (61) ein Endstück (64) aufweist, das einwärts vom Schlauch (69) liegt, wobei die Außenfläche des Endanschlusses mit wenigstens einer Rückhaltewulst (62) axial beabstandet vom Endstück (64) des Anschlusses versehen ist, wobei der Schlauch eine Hauptkarkassenverstärkung (74) aufweist, die eine Mehrzahl von Schichten (74a, 74b) aufweist, die sich axial über die Rückhaltewulst (62) erstrecken, und relativ zu denen die Hauptkarkasse axial festgelegt ist, eine Auskleidungsschicht (71), die einwärts von der Hauptkarkasse (74) angeordnet ist, um eine glatte Bohrung bereitzustellen, die an die Bohrung des Endanschlusses angrenzt, wobei die Innenauskleidung sich über wenigstens das Endstück (64) des Endanschlusses erstreckt, um zwischen diesem Anschluß und der Hauptkarkasse zu liegen, und eine Gummizwischenschicht (78), die dazu angeordnet ist, eine oder mehrere der Verstärkungsschichten von den anderen Verstärkungsschichten (74b) der Hauptkarkasse (74) zu trennen und sich über die volle Länge des Schlauchs zu erstrecken, um als sekundäre Auskleidungsschicht zu wirken, dadurch gekennzeichnet, daß die Zwischenschicht (78) mit der am weitesten innen gelegenen Auskleidung (71) über die axialen Enden der Verstärkungsinnenschicht(en) (74a) in Verbindung steht, um einen Ausleckschutz im Falle einer Störung der am weitesten innenliegenden Auskleidung (71) bereitzustellen.

2. Schlauchaufbau nach Anspruch 1, dadurch gekennzeichnet, daß eine zweite Rückhaltewulst (63) zur Aufnahme einer äußeren Gruppe (74a) von Verstärkungsschichten vorgesehen ist, wobei Auskleidungsmaterial (78) verwendet wird, um sicherzustellen, daß der Raum zwischen den beiden Wülsten (62, 63) vollständig eingenommen wird, um dadurch die äußere Gruppe von Schichten derart zu stützen, daß sie sich verzerrungsfrei zwischen den Bereichen der Scheitel der beiden Wülste erstrecken können.

3. Schlauchaufbau nach Anspruch 1 oder 2, dadurch gekennzeichnet, daß weniger als die Hälfte der gesamten Anzahl von Verstärkungsschichten der Hauptkarkasse zwischen den inneren (71) und sekundären (78) Verkleidungsschichten liegen.

4. Schlauchaufbau nach einem der vorangehenden Ansprüche, dadurch gekennzeichnet, daß zwei Aufbauten (73, 75) von Verbindungsdrähten axial beabstandet vorgesehen und so angeordnet sind, daß sie an gegenüberliegenden Seiten der ersten Rückhaltewulst (62) wirken.

5. Schlauchaufbau nach Anspruch 4, dadurch gekennzeichnet, daß die beiden Aufbauten (73, 75) von Verbindungsdrähten lediglich auf diejenigen (74b) der Verstärkungsschichten der Hauptkarkasse wirken, die zwischen den inneren und sekundären Verkleidungsschichten (71, 78) liegen.

6. Schlauchaufbau nach einem der vorangehenden Ansprüche, dadurch gekennzeichnet, daß die zweite äußere Gruppe (74a) von Schichten weiter vom Endstück des Anschlusses entfernt enden als die erste(n) innere(n) Schicht(en) (74b).

7. Schlauchaufbau nach Anspruch 6, dadurch gekennzeichnet, daß die erste innere Schicht oder die Gruppe von Schichten zwischen der ersten Wulst (62) und einer zweiten Wulst (63) enden.

8. Schlauchaufbau nach einem der vorangehenden Ansprüche, dadurch gekennzeichnet, daß die innere Verkleidungsschicht (71) über die Länge des Schlauchs bis zu einer Stelle innerhalb von wenigstens einem Meter, bevorzugt 500 mm des Endstücks des Endanschlusses eine im wesentlichen gleichförmige Dicke aufweist und bezüglich des Außendurchmessers progressiv bis zu einem Maximum an einer Stelle zunimmt, wo sie den Endanschluß umgibt.

9. Schlauchaufbau nach einem der vorangehenden Ansprüche, dadurch gekennzeichnet, daß der Außendurchmesser der inneren Verkleidung (71) ausgehend von einem minimalen Außendurchmesser wenigstens zu einer Stelle um das Endstück des Endanschlusses mit einer gleichförmigen Rate zunimmt.

10. Schlauchaufbau nach einem der vorangehenden Ansprüche, dadurch gekennzeichnet, daß die innere Verkleidungsschicht (71) sich bezüglich der Dicke dort verringert, wo sie sich über den Scheitelbereich der am weitesten innen gelegenen Wulst (72) in einer Richtung ausgehend vom Endstück des Endanschlusses erstreckt.

11. Schlauchaufbau nach einem der vorangehenden Ansprüche, dadurch gekennzeichnet, daß die innere Verkleidungsschicht (71) in der Längsrichtung des Schlauchaufbaus ihre axiale Stellung maximalen Durchmessers im wesentlichen ausgerichtet mit dem Scheitelbereich der am weitesten innen gelegenen Wulst (62) aufweist.

## Revendications

1. Ensemble de tuyau comprenant en combinaison un tuyau renforcé, dont une extrémité entoure au moins une partie d'un raccord d'extrémité (61), ledit raccord d'extrémité (61) comprenant une partie de queue (64) qui s'étend vers l'intérieur du tuyau (69), la surface extérieure du raccord d'extrémité étant pourvue d'au moins un bourrelet de retenue (62) espacé axialement de l'extrémité de queue (65) du raccord, ledit tuyau comprenant une carcasse principale de renforcement (74) comprenant une pluralité de couches (74a, 74b) qui s'étendent axialement par-dessus ledit bourrelet de retenue (62) et par rapport auxquelles la carcasse principale est fixée axialement, une couche de doublage (71) positionnée à l'intérieur de la carcasse principale (74) afin de procurer une âme lisse contiguë à l'alésage du raccord d'extrémité, ledit doublage intérieur s'étendant au-dessus d'au moins la partie de queue (64) du raccord d'extrémité pour s'étendre entre ce raccord et la carcasse principale, et une couche intermédiaire en caoutchouc (78) conçue pour séparer une ou plusieurs des couches (74a) de renforcement des autres couches (74b) de renforcement de la carcasse principale (74) et pour s'étendre sur toute la longueur du tuyau afin de servir de couche de doublage secondaire, caractérisé en ce que la couche intermédiaire (78) fait la liaison avec le doublage le plus intérieur (71) autour des extrémités axiales de la couche ou des couches (74a) de renforcement afin d'assurer une protection contre les fuites en cas de défaillance du doublage le plus intérieur (71).

2. Ensemble de tuyau selon la revendication 1, caractérisé en ce qu'un second bourrelet de retenue (63) est prévu pour le positionnement d'un groupe extérieur (74a) de couches de renforcement, du matériau de la couche de doublage (78) étant employé pour assurer que l'espace entre les deux bourrelets (62, 63) soit entièrement comblé, afin de supporter ainsi le groupe extérieur de couches de façon qu'elles puissent s'étendre sans déformation entre les emplacements des crêtes des deux bourrelets.

3. Ensemble de tuyau selon la revendication 1 ou la revendication 2, caractérisé en ce que moins de la moitié du nombre total de couches de renforcement de la carcasse principale s'étendent entre les couches de doublage intérieure (71) et secondaire (78).

4. Ensemble de tuyau selon l'une quelconque des revendications précédentes, caractérisé en ce que deux ensembles (73, 75) de fils métalliques de ceinture sont disposés espacés axialement et conçus pour agir sur les côtés opposés du premier bourrelet de retenue (62).

5. Ensemble de tuyau selon la revendication 4, caractérisé en ce que lesdits deux ensembles (73, 75) de fils métalliques de ceinture n'agissent que sur celles (74b) des couches de renforcement de la carcasse principale qui s'étendent entre les couches de doublage intérieure et secondaire (71, 78).

6. Ensemble de tuyau selon l'une quelconque des revendications précédentes, caractérisé en ce que le second groupe, extérieur (74a) de couches se termine plus loin de l'extrémité de queue du raccord que la ou les premières couches intérieures (74b).

7. Ensemble de tuyau selon la revendication 6, caractérisé en ce que la première couche intérieure, ou groupe de couches, se termine entre ledit premier bourrelet (62) et un second bourrelet (63).

8. Ensemble de tuyau selon l'une quelconque des revendications précédentes, caractérisé en ce que la couche de doublage intérieure (71) est d'épaisseur sensiblement uniforme sur la longueur du tuyau jusqu'à une position à au moins moins d'l mètre, de préférence moins de 500 mm, de l'extrémité de queue du raccord d'extrémité et augmente progressivement de diamètre extérieur jusqu'à un maximum en un emplacement où elle entoure le raccord d'extrémité.

9. Ensemble de tuyau selon l'une quelconque des revendications précédentes, caractérisé en ce que le diamètre extérieur du doublage intérieur (71) augmente de façon uniforme à partir de son diamètre extérieur minimum au moins jusqu'à un emplacement autour de la partie de queue du raccord d'extrémité.

10. Ensemble de tuyau selon l'une quelconque des revendications précédentes, caractérisé en ce que la couche de doublage intérieure (71) diminue d'épaisseur là où elle s'étend au-dessus de la zone de crête du bourrelet (62) situé le plus à l'intérieur par rapport à l'extrémité de queue du raccord d'extrémité.

11. Ensemble de tuyau selon l'une quelconque des revendications précédentes, caractérisé en ce que la couche de doublage intérieure (71) a, dans le sens longitudinal de l'ensemble de tuyau, sa position axiale de diamètre maximum sensiblement alignée avec la zone de crête du bourrelet (62) situé le plus à l'intérieur.
